# FASCICULE DE BREVET EUROPEEN

(11) **EP 2 608 683 B1**
(45) Date de publication et mention de la délivrance du brevet: **10.05.2017**
(21) Numéro de dépôt: 11757390.7
(22) Date de dépôt: 10.08.2011
(51) Int. Cl.: A23N 17/00, A23K 10/00

(54) **PROCÉDÉ ET INSTALLATION POUR LA FABRICATION D'ALIMENTS POUR ANIMAUX À BASE DE PLANTES FOURRAGÈRES**
VERFAHREN UND ANLAGE ZUR HERSTELLUNG VON TIERFUTTER AUS FUTTERPFLANZEN
METHOD AND PLANT FOR MANUFACTURING ANIMAL FEED FROM FODDER PLANTS

(30) Priorité: 24.08.2010 FR 1056732
(43) Date de publication de la demande: 03.07.2013
(73) Titulaire: Jaunet, Laurent, 44310 Saint Philbert De Grand Lieu (FR)
(72) Inventeur: DUGAST, Dominique, F-44140 Remouille (FR)
(74) Mandataire: Godineau, Valérie
(86) Numéro de dépôt international: PCT/FR2011/051895
(87) Numéro de publication internationale: WO 2012/025680

(56) Documents cités:
- EP-A1- 0 836 806
- WO-A1-02/094026
- FR-A1- 2 630 718
- US-A- 1 196 138
- US-A- 1 628 850
- US-A- 2 113 914
- US-A- 2 836 211
- US-A- 4 584 200
- US-A- 5 363 754

## Description

La présente invention concerne un procédé et une installation pour la fabrication d'aliments pour animaux à base de plantes fourragères, par intégration dans lesdites plantes d'au moins une composition liquide de préférence à base d'huile végétale et d'une composition dite solide de préférence à base de tourteau et/ou de céréales.

Depuis quelques années, des tentatives sont faites pour améliorer l'alimentation des animaux, en particulier des équidés et des bovins, notamment par intégration dans des plantes fourragères d'huile végétale et de tourteaux de plantes oléagineuses et/ou de céréales. L'huile végétale a notamment pour fonction de constituer un apport énergétique supplémentaire et de supprimer les coliques des animaux. Les tourteaux et/ou céréales rajoutés sous forme solide, en particulier sous forme de poudre, de granulés ou de morceaux éventuellement enrobés d'un produit collant, tel que de la mélasse, permettent quant à eux d'assurer de manière certaine l'apport protéique pour un bon métabolisme énergétique.

Jusqu'à présent, on travaille de manière discontinue, c'est-à-dire qu'on fabrique l'aliment sous forme de lots à l'aide d'un malaxeur en intégrant pour chaque nouveau lot à préparer l'ensemble des ingrédients dans le malaxeur. L'inconvénient d'une telle solution réside dans le fait que d'une part, le mélange obtenu est hétérogène et que, d'autre part, les fibres mises en oeuvre sont relativement courtes. Or, il est connu que les fibres longues favorisent la rumination.

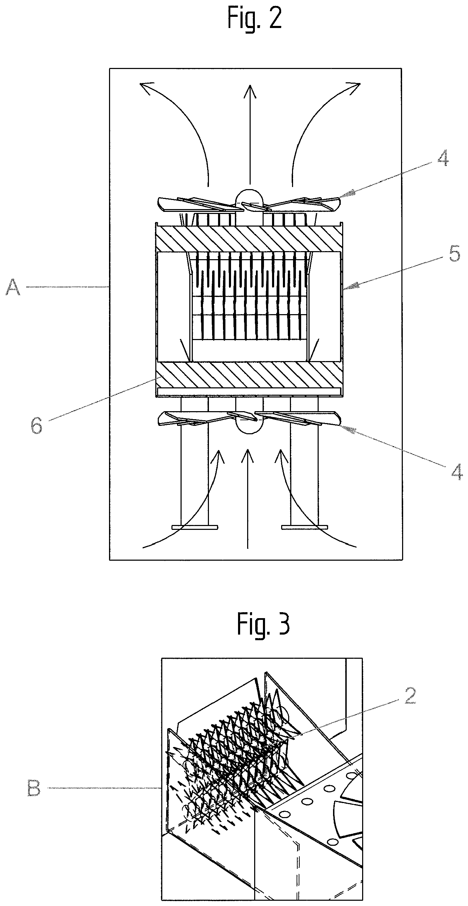

Il est également connu d'intégrer dans des aliments pour animaux des résidus d'égrainage du coton comme l'illustre le document US 4,584,200. Dans un premier temps, le coton est donc égrainé c'est-à-dire que les fibres sont séparées des graines. La matière première utilisée est formée par les résidus d'égrainage du coton. Ces résidus d'égrainage du coton sont introduits dans une chambre de compression où un vérin de compression peut comprimer ladite matière. Cette chambre de compression comporte en outre des moyens de pulvérisation représentés en 82 à la figure 2 et des moyens d'introduction d'une matière solide par une entrée représentée en 103 à la figure 3A.

Le procédé consiste donc à introduire la matière première formée de résidus d'égrainage du coton à l'intérieur de la chambre, à pulvériser une matière fluide sur ladite matière introduite puis à rajouter une matière solide par l'élément 103 avant de presser l'ensemble à l'aide d'un vérin, tel que représenté à la figure 3B, et à répéter les opérations jusqu'à remplissage total de la chambre.

Un traitement en continu est impossible de sorte que comme dans l'état de la technique préalablement cité, il est nécessaire de travailler par lot car les moyens de distribution de fluide sont mobiles pour se déplacer au-dessus des produits à compacter et sont intégrés à la chambre de compactage. Il est donc nécessaire d'attendre que la pulvérisation soit achevée avant de procéder à la compaction qui ne peut pas s'opérer pendant qu'une pulvérisation s'opère. En outre, un tel procédé appliqué au coton n'est pas transposable à des plantes fourragères dont les caractéristiques sont différentes.

D'autres documents tels que la demande internationale WO 02094026, le brevet US 4584200 et le brevet US 5,353,754 décrivent des installations de traitement de coton dépourvues de possibilités d'intégration d'éléments solides et liquides dans les résidus d'égrainage du coton pour obtenir un élément homogène et doivent dont être considérés comme l'arrière plan technologique.

Un but de la présente invention est donc de proposer un procédé et une installation dont les conceptions permettent la production en continu d'aliments pour animaux dans lesquels les différents ingrédients sont répartis de manière homogène.

A cet effet, l'invention a pour objet un procédé pour la fabrication d'aliments tel que décrit dans les revendications.

L'étape de déconditionnement intégrant un dépoussiérage permet de travailler sur des plantes fourragères et de conserver des longueurs de fibres importantes.

L'addition de la composition, dite solide, à un stade où les plantes fourragères ont d'ores et déjà été pré-imprégnées d'une composition liquide favorise l'adhérence des composés de la composition solide aux plantes fourragères formant la base de l'aliment. Cette adhérence est renforcée par l'introduction de la composition solide dans la chambre où s'opère une compression des plantes fourragères. Il doit être noté que, dans tout ce qui précède, comme dans tout ce qui suit, on entend par composition solide, une composition dont le taux d'humidité est inférieur au taux d'humidité de la composition liquide.

La mise en oeuvre du procédé permet d'obtenir d'excellents résultats en termes d'homogénéité des composés, y compris dans le cas de fibres longues.

L'invention a encore pour objet une installation pour la fabrication d'aliments pour animaux à base de plantes fourragères, telle que décrite dans les revendications.

L'invention sera bien comprise à la lecture de la description suivante d'exemples de réalisation, en référence aux dessins annexés dans lesquels :

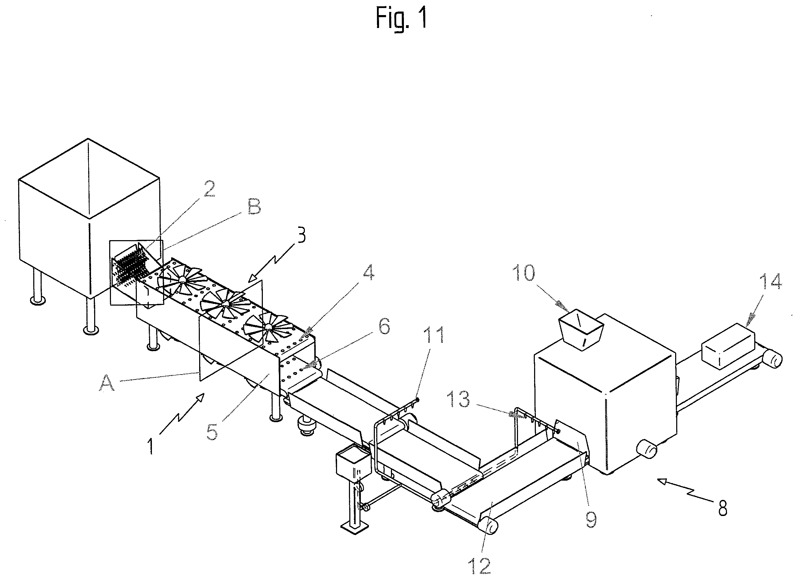

la figure 1 représente une vue schématique en perspective d'une installation conforme à l'invention ;
la figure 2 représente une vue du détail A de la figure 1 ;
la figure 3 représente une vue du détail B de la figure 1.

Comme mentionné ci-dessus, l'installation, objet de l'invention, est plus particulièrement destinée à permettre la fabrication d'aliments pour animaux à base de plantes fourragères, par intégration dans lesdites plantes d'au moins une composition liquide de préférence à base d'huile végétale et d'une composition dite solide de préférence à base de tourteau et/ou de céréales. Ainsi, à titre d'exemple, les plantes fourragères qui constituent la base de l'aliment peuvent être formées par du foin. La composition liquide à ajouter peut contenir de l'huile végétale, de préférence de l'huile de colza, et des huiles essentielles. La composition, dite solide, qui se présente sous forme de poudre et/ou de granulés et/ou de morceaux éventuellement enrobés d'un produit collant, tel que de la mélasse, peut contenir des tourteaux de plantes oléagineuses, tels que des tourteaux de soja et/ou des céréales, telles que de l'avoine et, si nécessaire, des éléments minéraux, du sel, de la mélasse, des sucres simples, et tout autre ingrédient susceptible d'améliorer la qualité de l'aliment. Ainsi, à titre d'exemple, un aliment obtenu par mise en oeuvre du procédé et à l'aide d'une installation conforme à l'invention, peut présenter une composition telle que suit :

| | |
|---|---|
| - foin | 86 % |
| - huile de colza | 4 % |
| - tourteaux de soja | 4 % |
| - avoine | 3 % |
| - sel | 1 % |
| - mélasse | 2 % |

Les pourcentages ci-dessus sont exprimés en pourcentage en poids rapporté au poids total de la composition.

Les plantes fourragères formant la base de l'aliment sont généralement conditionnées sous forme de balles ou de bottes. L'installation comporte donc un poste 1 de déconditionnement de ces plantes fourragères équipé de moyens 3 de dépoussiérage desdites plantes.

Généralement, le poste 1 de déconditionnement est formé au moins de l'association de moyens de déconditionnement formés de moyens de démêlage des plantes fourragères et/ou d'un dérouleur de balle, lorsque la plante fourragère a préalablement été conditionnée en balle, et de moyens de dépoussiérage.

Les moyens de dépoussiérage sont logés à l'intérieur d'une enceinte, tel qu'un tunnel, munie au niveau de son plancher de moyens de convoyage, ou de moyens d'entraînement en déplacement des plantes fourragères, tels qu'une bande transporteuse, et généralement au moins au niveau de son plafond d'organes d'aspiration à fonction de dépoussiérage de l'atmosphère de l'enceinte. Cette enceinte est équipée d'une entrée d'alimentation en plantes fourragères à dépoussiérer et d'une sortie d'évacuation desdites plantes dépoussiérées en direction du poste de reconditionnement après passage sous lesdits moyens de distribution par pulvérisation.

Les moyens de déconditionnement peuvent être disposés, soit au niveau de l'entrée de l'enceinte de dépoussiérage, soit immédiatement en amont de l'entrée de ladite enceinte pour alimenter en plantes fourragères ladite enceinte.

Dans le cas d'un démêleur, ce dernier est généralement positionné au niveau de l'entrée de l'enceinte de dépoussiérage. Dans le cas d'un dérouleur de balle, ce dernier est positionné dans une chambre de déconditionnement qui communique avec l'enceinte de dépoussiérage, le contenu de la chambre de déconditionnement étant transféré par le dérouleur via l'entrée de l'enceinte de dépoussiérage dans ladite enceinte de dépoussiérage où la poussière est aspirée par les moyens d'aspiration au cours du déplacement des plantes fourragères dans l'enceinte à l'aide des moyens de convoyage.

En d'autres termes, le poste 1 de déconditionnement comprend au moins un organe 2 de déconditionnement, tel que rouleau, peigne et des moyens 3 de dépoussiérage formés d'au moins un organe 4 de soufflage et/ou d'aspiration. Ledit organe 4 de soufflage et/ou d'aspiration est, de préférence, positionné au voisinage immédiat de l'organe 2 ou d'au moins un organe 2 de déconditionnement.

De préférence, les moyens 3 de dépoussiérage comprennent une pluralité d'organes 4 de soufflage et/ou d'aspiration disposés au moins partiellement à l'intérieur d'un tunnel 5 équipé de moyens 6 d'entraînement en déplacement ou de convoyage des plantes fourragères se présentant sous forme d'une bande transporteuse ajourée ou non, lesdits moyens d'entraînement en déplacement étant aptes à déplacer lesdites plantes fourragères au moins à l'intérieur du tunnel pour permettre à leur sortie du tunnel, leur déplacement en direction du poste de reconditionnement après passage sous lesdits moyens de distribution par pulvérisation.

Dans les exemples représentés, le poste 1 de déconditionnement comprend une zone de déversement des plantes fourragères délimitée par une caisse. Cette caisse, ouverte sur sa face du dessus pour son remplissage, est munie d'une sortie d'évacuation des plantes fourragères équipée d'un démêleur formé par exemple de deux rouleaux hérissons à axes parallèles s'imbriquant l'un dans l'autre pour assurer un démêlage des fibres des plantes fourragères. Les fibres des plantes fourragères obtenues en sortie de sortie présentent généralement une longueur moyenne identique à la longueur des fibres en entrée et comprise généralement entre 15 et 60 cm.

Un tunnel 5 équipé d'organes 4 de soufflage et/ou d'aspiration est disposé, dans le prolongement de ces rouleaux hérissons qui font office d'organe 2 de déconditionnement, pour être alimenté en entrée en plantes fourragères. Ce tunnel 5 est équipé, au niveau de son plancher, d'une bande transporteuse pour le déplacement des plantes fourragères à l'intérieur du tunnel 5 au moins jusqu'à la sortie du tunnel. Dans l'exemple représenté, la bande transporteuse est ajourée. Les ajours permettent une circulation d'air forcé à travers ladite bande transporteuse. Cette circulation d'air forcé à fonction de dépoussiérage est ici obtenue à l'aide de deux séries d'organes 4 de soufflage et/ou d'aspiration, en l'occurrence un ou des ventilateurs de soufflage disposé(s) au-dessous du plancher du tunnel 5, et une ou des turbines d'aspiration disposées au niveau du plafond dudit tunnel 5. Ces organes 4 de soufflage et/ou d'aspiration créent une circulation forcée d'air depuis le plancher en direction du plafond du tunnel. Cette circulation forcée d'air entraîne les poussières hors desdites plantes fourragères défilant à l'intérieur du tunnel.

Il aurait pu être prévu uniquement des organes d'aspiration au niveau du sommet du tunnel pour rejeter les poussières dans l'atmosphère ou dans une zone confinée.

L'installation comporte encore un poste 8 de reconditionnement des plantes fourragères comportant une chambre 9 de compression ou de compactage pour un reconditionnement sous forme de bloc 14, en particulier de botte, balle ou similaire, desdites plantes fourragères. La chambre 9 de compression est équipée de moyens 10 d'alimentation en composition dite solide pour permettre, parallèlement au reconditionnement des plantes fourragères, l'intégration à l'intérieur du bloc 14, de la composition dite solide de préférence à base de tourteau et/ou de céréales. L'installation comporte également, disposés entre poste 1 de déconditionnement et poste 8 de reconditionnement, des moyens 11 de distribution par pulvérisation de la composition liquide à base d'huile végétale et des moyens 12 d'entraînement en déplacement des plantes fourragères à défiler sous lesdits moyens 11 de distribution par pulvérisation.

Les moyens 12 d'entraînement en déplacement des plantes fourragères entre poste 1 de déconditionnement et poste 8 de reconditionnement comprennent au moins des moyens de convoyage comportant une surface mobile d'appui des charges, tels qu'une bande transporteuse sans fin, et les moyens 11 de distribution par pulvérisation de la composition liquide à base d'huile végétale comprennent au moins un organe 13 de distribution par pulvérisation, tel que rampe ou buse surmontant les moyens de convoyage, tels que la bande transporteuse et, orienté pour projeter un flux de fluide en direction du plan ou surface d'appui des charges des moyens de convoyage en l'occurrence de la bande transporteuse. L'organe 13 de distribution par pulvérisation, tel que rampe ou buse, est de préférence équipé d'un débitmètre.

Dans les exemples représentés, la bande transporteuse sans fin est formée d'une succession de tronçons de bandes transporteuses. Au moins certains des tronçons sont équipés d'une rampe de pulvérisation qui s'étend transversalement à l'axe longitudinal de la bande pour couvrir sensiblement une largeur de bande. Chaque rampe de pulvérisation comporte plusieurs sorties de fluide. Les tronçons de la bande transporteuse permettent de délimiter un chemin coudé de circulation des plantes fourragères pour réduire l'encombrement de l'installation. Cette bande transporteuse se prolonge jusqu'à l'intérieur de la chambre de compression du poste 8 de reconditionnement. Cette chambre 9 de compression est en effet délimitée à l'aide d'un caisson, dont les parois latérales opposées, disposées sur la trajectoire définie par les moyens 12 d'entraînement en déplacement, présentent l'une, une entrée des plantes fourragères à l'intérieur de la chambre 9 de compression, l'autre une sortie d'évacuation des plantes fourragères de ladite chambre 9 de compression. Les plantes fourragères sont entraînées en déplacement entre entrée et sortie de ladite chambre 9 de compression par l'intermédiaire de la bande transporteuse constitutive des moyens 12 d'entraînement en déplacement qui se prolonge à l'intérieur de ladite chambre 9 de compression.

Les moyens 10 d'alimentation en composition dite solide de la chambre 9 de compression du poste 8 de reconditionnement sont disposés en partie supérieure de la chambre 9 et comprennent au moins un réservoir, tel qu'une trémie, de stockage de la composition dite solide, et des moyens de distribution d'une quantité prédéterminée de ladite composition dite solide à l'intérieur de la chambre 9 de compression. Le positionnement des moyens 10 d'alimentation en composition dite solide de la chambre 9 de compression, en partie supérieure de la chambre 9 de compression, permet une chute par gravité à l'intérieur de ladite chambre 9 de compression de ladite composition dite solide, ce qui facilite son intégration aux plantes fourragères défilant dans ladite chambre 9 de compression. Ces moyens 10 d'alimentation en composition solide font plus ou moins saillie de ladite chambre 9 de compression. Dans les exemples représentés, les moyens de distribution d'une quantité prédéterminée de ladite composition dite solide à l'intérieur de la chambre 9 de compression comprennent une gouttière équipée axialement d'une vis hélicoïdale d'entraînement en déplacement de la matière à l'intérieur de la gouttière, une extrémité de la gouttière débouchant dans la partie supérieure de la chambre 9 de compression du poste 8 de reconditionnement. Ces moyens de distribution n'ont pas été représentés aux figures.

Pour l'alimentation en composition solide de la gouttière, la chambre 9 de compression est surmontée d'une trémie visible aux figures. Pour permettre un reconditionnement de l'ensemble sous forme de blocs 14 généralement parallélépipédiques, la chambre 9 de compression est équipée d'au moins un organe de compression, tel que vis, peigne, plateau, membrane, rouleau, ou similaire.

Dans les exemples représentés, l'organe de compression (non visible) est formé par un piston couplé à une excentrique.

Pour permettre la sortie du bloc 14 de la chambre de compression, la chambre 9 de compression est munie d'une ouverture d'évacuation des produits sous forme de bloc 14 de type botte.

Le fonctionnement d'une telle installation est le suivant. Les plantes fourragères, généralement conditionnées en balle, sont amenées dans le caisson d'entrée de l'installation pour être soumises à l'action des rouleaux hérissons qui amènent les plantes fourragères sous forme de fibres à la surface de la bande transporteuse. Celle-ci fait circuler les plantes fourragères à l'intérieur du tunnel 5 où les plantes fourragères sont dépoussiérées à l'aide d'un flux d'air en l'occurrence ici par le courant d'air ascendant formé. Les plantes fourragères sont ensuite entraînées à défiler sous les rampes de pulvérisation qui projettent la composition liquide à la surface desdites plantes fourragères avant de pénétrer dans la chambre de compression où elles sont recouvertes au moins partiellement de la composition solide avant d'être compressées et d'être évacuées de la chambre sous forme d'un bloc 14. Ce bloc peut être stocké avant d'être consommé par les animaux.

L'installation peut être disposée sur une structure support roulante, telle qu'un plateau de remorque, pour former une installation mobile. Ladite installation peut donc être une installation roulante.

## Revendications

1. Procédé pour la fabrication d'aliments pour animaux à base de plantes fourragères, par intégration dans lesdites plantes d'au moins une composition liquide à base, de préférence, d'huile végétale et d'une composition, dite solide, à base, de préférence, de tourteau et/ou de céréales, **caractérisé en ce que** ledit procédé comprend au moins :
- une étape de déconditionnement des plantes fourragères conditionnées généralement en balles, à l'aide d'un démêleur alimentant en entrée un tunnel (5),
- une étape de dépoussiérage desdites plantes fourragères défilant à l'intérieur du tunnel par circulation forcée d'air depuis le plancher en direction du plafond du tunnel (5),
- une étape d'entraînement en déplacement des plantes fourragères déconditionnées et dépoussiérées à défiler sous des moyens (11) de distribution de fluide par pulvérisation destinés à pulvériser ladite composition liquide de préférence à base d'huile végétale sur les plantes fourragères déconditionnées et
- une étape d'introduction des plantes fourragères à l'intérieur d'une chambre (9) de compression ou de compactage pour un reconditionnement sous forme de bloc (14), en particulier de botte, balle ou similaire, ladite chambre (9) de compression étant équipée de moyens (10) d'alimentation en composition solide pour permettre, parallèlement au reconditionnement des plantes fourragères, l'intégration, à l'intérieur du bloc (14), de la composition dite solide de préférence à base de tourteau et/ou de céréales.

2. Installation pour la fabrication d'aliments pour animaux à base de plantes fourragères, par intégration dans lesdites plantes d'au moins une composition liquide de préférence à base d'huile végétale et d'une composition dite solide de préférence à base de tourteau et/ou de céréales, **caractérisée en ce que** ladite installation comprend :
- un poste (1) de déconditionnement desdites plantes fourragères comprenant un démêleur alimentant en entrée un tunnel (5) et des moyens (3) de dépoussiérage desdites plantes, comprenant une pluralité d'organes (4) de soufflage et/ou d'aspiration disposés au moins partiellement à l'intérieur du tunnel (5) équipé de moyens (6) d'entraînement en déplacement ou de convoyage des plantes fourragères se présentant sous forme d'une bande transporteuse pour une circulation forcée d'air depuis le plancher en direction du plafond du tunnel (5) en vue d'un entraînement des poussières hors des plantes fourragères défilant à l'intérieur du tunnel (5),
- un poste (8) de reconditionnement desdites plantes fourragères comportant une chambre (9) de compression ou de compactage pour un reconditionnement sous forme de bloc (14), en particulier de botte, balle ou similaire, ladite chambre (9) de compression étant équipée de moyens (10) d'alimentation en composition dite solide pour permettre, parallèlement au reconditionnement des plantes fourragères, l'intégration à l'intérieur du bloc (14), de la composition dite solide à base de tourteau et/ou de céréales et,
- disposés entre poste (1) de déconditionnement et poste (8) de reconditionnement, des moyens (11) de distribution par pulvérisation de la composition liquide, de préférence à base d'huile végétale, et des moyens (12) d'entraînement en déplacement des plantes fourragères à défiler sous lesdits moyens (11) de distribution par pulvérisation.

3. Installation selon la revendication 2
**caractérisé en ce que** la bande transporteuse de convoyage des plantes fourragères à l'intérieur du tunnel (5) est ajourée et **en ce que** la pluralité d'organes (4) de soufflage et/ou d'aspiration disposés au moins partiellement à l'intérieur du tunnel (5) comprend deux séries d'organes (4) de soufflage et/ou d'aspiration, en l'occurrence un ou des ventilateurs de soufflage disposé(s) au-dessous du plancher du tunnel (5), et une ou des turbines d'aspiration disposées au niveau du plafond dudit tunnel (5).

4. Installation selon l'une des revendications 2 ou 3
**caractérisée en ce que** les moyens (12) d'entraînement en déplacement des plantes fourragères entre poste (1) de déconditionnement et poste (8) de reconditionnement comprennent au moins des moyens de convoyage tels qu'une bande transporteuse sans fin, et **en ce que** les moyens (11) de distribution par pulvérisation de la composition liquide, de préférence à base d'huile végétale comprennent au moins un organe (13) de distribution par pulvérisation, tel que rampe ou buse, surmontant les moyens de convoyage tels que la bande transporteuse et, orienté pour projeter un flux de fluide en direction du plan d'appui des charges des moyens de convoyage.

5. Installation selon la revendication 4 ,
**caractérisée en ce que** l'organe (13) de distribution par pulvérisation, tel que rampe ou buse, est équipé d'un débitmètre.

6. Installation selon l'une des revendications 2 à 5,
**caractérisée en ce que** les moyens (10) d'alimentation en composition de la chambre (9) de compression du poste (8) de reconditionnement sont disposés en partie supérieure de la chambre (9) et comprennent au moins un réservoir, tel qu'une trémie, de stockage de la composition dite solide, et des moyens de distribution d'une quantité prédéterminée de ladite composition dite solide à l'intérieur de la chambre (9) de compression.

7. Installation selon la revendication 6,
**caractérisée en ce que** les moyens de distribution d'une quantité prédéterminée de ladite composition dite solide à l'intérieur de la chambre (9) de compression comprennent une gouttière équipée axialement d'une vis hélicoïdale d'entraînement en déplacement de la matière à l'intérieur de la gouttière, une extrémité de la gouttière débouchant dans la partie supérieure de la chambre (9) de compression du poste (8) de reconditionnement.

8. Installation selon l'une des revendications 2 à 7,
**caractérisée en ce que** la chambre (9) de compression est équipée d'au moins un organe de compression, tel que vis, peigne, plateau, membrane, rouleau ou similaire.

9. Installation selon l'une des revendications 2 à 8,
**caractérisée en ce que** la chambre (9) de compression est munie d'une ouverture d'évacuation des produits sous forme de bloc (14) de type botte.

## Patentansprüche

1. Verfahren für die Herstellung von Tierfutter aus Futterpflanzen durch Integration in die Pflanzen mindestens einer flüssigen Zusammensetzung auf der Basis von vorzugsweise Pflanzenöl und einer festen Zusammensetzung auf der Basis von vorzugsweise Ölkuchen und/oder Getreide, **dadurch gekennzeichnet, dass** das Verfahren mindestens umfasst:
- einen Schritt des Entpackens der allgemein in Ballen verpackten Futterpflanzen mit Hilfe eines versorgenden Entwirrers am Eingang eines Tunnels (5),
- einen Schritt des Entstaubens der Futterpflanzen, die sich im Innern des Tunnels durch Luftzwangszirkulation vom Boden in Richtung der Decke des Tunnels (5) vorbeibewegen,
- einen Schritt der verlagernden Vorbeibewegung der entpackten und entstaubten Futterpflanzen unter Fluidverteilungsmitteln (11) durch Zerstäuben, die bestimmt sind, die flüssige Zusammensetzung vorzugsweise auf der Basis von Pflanzenöl über den ausgepackten Futterpflanzen zu zerstäuben, und
- einen Schritt der Einleitung der Futterpflanzen in das Innere einer Kompressions- oder Kompaktierungskammer (9) für eine Neuverpackung in Blockform (14), insbesondere Bündel, Ballen oder ähnliches, wobei die Kompressionskammer (9) mit Versorgungsmitteln (10) mit fester Zusammensetzung ausgestattet ist, um parallel zur Neuverpackung der Futterpflanzen die Integration fester Zusammensetzung vorzugsweise auf der Basis von Ölkuchen und/oder von Getreide im Innern des Blocks (14) zu erlauben.

2. Anlage für die Herstellung von Tierfutter aus Futterpflanzen durch Integration in die Pflanzen mindestens einer flüssigen Zusammensetzung auf der Basis von Pflanzenöl und einer festen Zusammensetzung vorzugsweise auf der Basis von Ölkuchen und/oder Getreide, **dadurch gekennzeichnet, dass** die Anlage umfasst:
- eine Entpackungsstelle (1) der Futterpflanzen, umfassend einen versorgenden Entwirrer am Eingang eines Tunnels (5) und Entstaubungsmittel (3) der Pflanzen, umfassend eine Vielzahl von Blas- und/oder Ansaugmitteln (4), die mindestens teilweise im Innern des Tunnels (5) angeordnet sind, der mit Verlagerungsantriebs- oder Fördermitteln (6) der Futterpflanzen in Form eines Transportsbands für eine Luftzwangszirkulation vom Boden in Richtung der Decke des Tunnels (5) zwecks Beförderung der Stäube aus den sich im Innern des Tunnels (5) bewegenden Futterpflanzen ausgestattet ist,
- eine Neuverpackungsstelle (8) der Futterpflanzen, umfassend eine Kompressions- oder Kompaktierungskammer (9) für eine Neuverpackung in Blockform (14), insbesondere Bündel, Ballen oder ähnliches, wobei die Kompressionskammer (9) mit Versorgungsmitteln (10) mit fester Zusammensetzung ausgestattet ist, um parallel zur Neuverpackung der Futterpflanzen die Integration fester Zusammensetzung vorzugsweise auf der Basis von Ölkuchen und/oder von Getreide im Innern des Blocks (14) zu erlauben, und
- angeordnet zwischen Entpackungsstelle (1) und Neuverpackungsstelle (8), Verteilungsmittel (11) durch Zerstäuben der flüssigen Zusammensetzung vorzugsweise auf der Basis von Pflanzenöl, und Verlagerungsantriebsmittel (12) der sich unter den Verteilungsmitteln (11) durch Zerstäuben bewegenden Futterpflanzen.

3. Anlage nach Anspruch 2,
**dadurch gekennzeichnet, dass** das Transportförderband der Futterpflanzen im Innern des Tunnels (5) durchbrochen ist und dass die Vielzahl von Blas- und/oder Ansaugmitteln (4), die mindestens teilweise im Innern des Tunnels (5) angeordnet sind, zwei Reihen von Blas- und/oder Ansaugorganen (4) umfasst, im vorliegenden Fall einen oder Blasventilatoren, der/die unter dem Boden des Tunnels (5) angeordnet ist/sind, und eine oder Ansaugturbinen, die im Bereich der Decke des Tunnels (5) angeordnet ist/sein.

4. Anlage nach einem der Ansprüche 2 oder 3,
**dadurch gekennzeichnet, dass** die Verlagerungsantriebsmittel (12) der Futterpflanzen zwischen Entpackungsstelle (1) und Neuverpackungsstelle (8) mindestens Fördermittel wie ein Endlostransportband umfassen und dass die Verteilungsmittel (11) durch Zerstäuben der flüssigen Zusammensetzung vorzugsweise auf der Basis von Pflanzenöl mindestens ein Verteilungsorgan (13) durch Zerstäuben wie Rampe oder Düse über den Fördermitteln wie Transportband umfassen und ausgerichtet sind, um einen Fluidstrom in Richtung der Stützfläche der Lasten der Fördermittel zu projizieren.

5. Anlage nach Anspruch 4,
**dadurch gekennzeichnet, dass** das Verteilungsorgan (13) durch Zerstäuben wie Rampe oder Düse mit einem Durchflussmengenmesser ausgestattet ist.

6. Anlage nach einem der Ansprüche 2 bis 5,
**dadurch gekennzeichnet, dass** die Versorgungsmittel (10) mit Zusammensetzung der Kompressionskammer (9) des Neuverpackungsplatzes (8) im oberen Teil der Kammer (9) angeordnet sind und mindestens ein Reservoir wie einen Trichter zur Lagerung der festen Zusammensetzung und Verteilungsmittel einer vorbestimmten Menge der festen Zusammensetzung im Innern der Kompressionskammer (9) umfassen.

7. Anlage nach Anspruch 6,
**dadurch gekennzeichnet, dass** die Verteilungsmittel einer vorbestimmten Menge der festen Zusammensetzung im Innern der Kompressionskammer (9) eine Rinne umfassen, die axial mit einer Schnecke ausgestattet ist, um Material im Innern der Rinne verlagernd anzutreiben, wobei ein Ende der Rinne in den oberen Teil der Kompressionskammer (9) der Neuverpackungsplatzes (8) ausmündet.

8. Anlage nach einem der Ansprüche 2 bis 7,
**dadurch gekennzeichnet, dass** die Kompressionskammer (9) mit mindestens einem Kompressionsorgan wie Schraube, Kamm, Platte, Membran, Rad oder ähnlichem ausgestattet ist.

9. Anlage nach einem der Ansprüche 2 bis 8,
**dadurch gekennzeichnet, dass** die Kompressionskammer (9) mit einer Auswurföffnung der Produkte in Blockform (14) vom Type Bündel ausgestattet ist.

## Claims

1. A method for manufacturing animal feed from fodder plants, by integrating at least a liquid composition, preferably having a base of vegetable oil, and a so-called solid composition, preferably having a base of oil cake and/or cereals, into said plants, **characterized in that** said method comprises at least:
- a step for unpacking fodder plants generally packaged in bales, using a bale separator feeding the inlet of a tunnel (5),
- a step for dedusting said fodder plants passing inside the tunnel by forced air circulation from the floor toward the ceiling of the tunnel (5),
- a step for driving the movement of the unpacked and de-dusted fodder plants to be passed below means (11) for dispensing fluid by spraying intended to spray said liquid composition, preferably with a base of vegetable oil, on the unpacked fodder plants, and
- a step for introducing the fodder plants inside a compression or compacting chamber (9) for repacking in block form (14), in particular in the form of a bunch, bale or the like, said compression chamber (9) being equipped with means (10) for supplying solid composition to allow the integration, in parallel with the repacking of fodder plants, of the so-called solid composition, preferably with a base of oil cake and/or cereals, within the block (14).

2. A plant for manufacturing animal feed from fodder plants, by integrating at least a liquid composition, preferably with a base of vegetable oil, and a so-called solid composition, preferably with a base of oil cake and/or cereals, into said plants, **characterized in that** said plant comprises:
- a unit (1) for unpacking said fodder plants comprising a bale separator feeding the inlet of a tunnel (5) and means (3) for dedusting said plants, comprising a plurality of blowing and/or suctioning members (4) positioned at least partially inside the tunnel (5) equipped with means (6) for driving the movement or conveyance of fodder plants, assuming the form of a conveyor belt for forced air circulation from the floor toward the ceiling of the tunnel (5) in order to drive dust outside the fodder plants passing through the inside of the tunnel (5),
- a unit (8) for repacking said fodder plants including a compression or compacting chamber (9) for repacking in the form of a block (14), in particular a bunch, bale or the like, said compression chamber (9) being equipped with means (10) for supplying so-called solid composition to make it possible to integrate, in parallel with the repacking of the fodder plants, the so-called solid composition, with a base of oil cake and/or cereals, inside the block (14), and
- positioned between the unpacking unit (1) and the repacking unit (8), means (11) for dispensing liquid composition, preferably with a base of vegetable oil, by spraying, and means (12) for driving the movement of the fodder plants to be passed below said means (11) for dispensing by spraying.

3. The plant according to claim 2,
**characterized in that** the conveyor belt conveying fodder plants inside the tunnel (5) is open-worked and **in that** the plurality of blowing and/or suctioning members (4) positioned at least partially inside the tunnel (5) comprises two series of blowing and/or suctioning members (4), in the case at hand one or more blowing fans positioned below the floor of the tunnel (5), and one or more suction turbines positioned at the ceiling of said tunnel (5).

4. The plant according to one of claims 2 or 3,
**characterized in that** the means (12) for driving the movement of the fodder plants between the unpacking unit (1) and the repacking unit (8) comprise at least conveying means such as an endless conveyor belt, and **in that** the means (11) for dispensing liquid composition, preferably with a base of vegetable oil, by spraying comprise at least one spraying dispensing member (13), such as a ramp or nozzle, topping the conveying means, such as the conveyor belt, and oriented to spray a stream of fluid toward the bearing plane of the loads of the conveying means.

5. The plant according to claim 4,
**characterized in that** the spraying dispensing member (13), such as a ramp or nozzle, is equipped with a flow meter.

6. The plant according to one of claims 2 to 5,
**characterized in that** the means (10) for supplying composition to the compression chamber (9) of the repacking unit (8) are positioned in the upper part of the chamber (9) and comprise at least one reservoir, such as a hopper, for storing the so-called solid composition, and means for dispensing a predetermined quantity of said so-called solid composition to the inside of the compression chamber (9).

7. The plant according to claim 6,
**characterized in that** the means for dispensing a predetermined quantity of said so-called solid composition inside the compression chamber (9) comprise a trough axially equipped with a helical screw driving the movement of the material inside the trough, one end of the trough emerging in the upper part of the compression chamber (9) of the repacking unit (8).

8. The plant according to one of claims 2 to 7,
**characterized in that** the compression chamber (9) is equipped with at least one compression member, such as a screw, comb, plate, membrane, roller or the like.

9. The plant according to one of claims 2 to 8,
**characterized in that** the compression chamber (9) is provided with a discharge opening for products in block form (14), of the bunch type.
